# EUROPÄISCHE PATENTANMELDUNG

(11) **EP 4 613 384 A1**
(43) Veröffentlichungstag der Anmeldung: **10.09.2025**
(21) Anmeldenummer: 25161828.6
(22) Anmeldetag: 05.03.2025
(51) Int. Cl.: B05B 14/43, B01D 46/00, B01D 46/121, B01D 46/52, B01D 50/20

(54) **VERFAHREN ZUR AUSBILDUNG EINES FILTERMODULS IN EINER FILTERANLAGE ZUR REINIGUNG EINES MIT OVERSPRAY-BELADENEN LUFTSTROMS**

(30) Priorität: 05.03.2024 DE 102024106337
(71) Anmelder: Innovative Paint & Conveyor Systems S.L.,, 08550 Gavá, Barcelona (ES)
(72) Erfinder: KNAUS, Uwe, 75228 Ispringen (DE); WAGNER, Andreas, 71093 Weil im Schönbuch (DE)
(74) Vertreter: Kleine, Hubertus

(57) **Zusammenfassung**

Ein Verfahren zur Ausbildung eines Filtermoduls (1) in einer Filteranlage, wobei die Filteranlage einen insbesondere umfangsseitig geschlossenen Gehäusebereich (100) des Filtermoduls als Abschnitt eines Overspray-Ableitungskanals der Filteranlage aufweist, mit den folgenden Schritten:
A Entkopplung (201) eines beladenen Trägheitsabscheiders (50) gegen-über dem Gehäusebereich (100) der Overspray-Filteranlage;
B getrennte Entnahme (202) eines beladenen Filtereinsatzes (1) mit einem beladenen Flächenfiltermedium (12) und einem Stützgittergestell (2) und/oder einem Stützgestell (102) aus dem Gehäusebereich (100);
C Einsetzen (203) eines neuen Filtereinsatzes oder Einsetzen eines Filtereinsatzes mit einem neuen Flächenfiltermedium und dem Stützgittergestell (12) und/oder dem Stützgestell (102); und
D Aufsetzen und/oder Einsetzen (204) eines neuen Trägheitsfilters oder des beladene Trägheitsfilters auf oder in den Gehäusebereich (100) mit dem eingesteckten Filtereinsatz (1).

## Beschreibung

Die Erfindung betrifft ein Verfahren zur Ausbildung eines Filtermoduls in einer Filteranlage zur Reinigung eines mit Overspray-beladenen Luftstroms.

Typischerweise umfassen bekannte Filtermodule zum Abscheiden von Overspray ein kastenförmiges Außengehäuse in welchem Filterelemente angeordnet sind. Diese Filtermodule können als Einweg- oder Mehrweg-Filtermodule ausgebildet sein. Sie sind zumeist auswechselbar in der Filteranlage angeordnet.

Nachteilig an bekannten Einweg-Filtermodulen ist aufgrund der hohen Anzahl an zusammengesetzten Einzelteilen des Filtermoduls und der verschmutzten nicht-wiederverwendbaren Teile aufgrund der Abmessungen ein erhöhter Entsorgungsaufwand.

Bei Mehrweg-Filtermodulen kann eine Pyrolysereinigung zur Wiederaufarbeitung der Filtermodule eingesetzt werden. Problematisch dabei ist allerdings, dass sich einige Lacke bei der Wärmebehandlung in die Oberfläche der Filterelemente einbrennen und dadurch die Oberflächenbeschaffenheit ändern. Überdies limitiert die Hitzebeständigkeit der Filterelemente die Art der Filterelemente und Filtermedien, so dass nicht in jedem Fall eine optimale Filtereffizienz erreichbar ist.

Die Aufgabe der Erfindung ist es, bei einem Verfahren zur Ausbildung eines Filtermoduls bereitzustellen, in welchem lediglich gezielt besonders belastete Elemente des Filtermoduls ausgetauscht werden und andere Elemente wiederverwendet werden.

Diese Aufgabe wird durch das Bereitstellen eines Verfahrens mit den Merkmalen des Anspruchs 1 gelöst.

Das erfindungsgemäße Verfahren dient Ausbildung eines Filtermoduls in einer Filteranlage. Die Filteranlage weist einen insbesondere umfangsseitig geschlossenen Gehäusebereich des Filtermoduls als Abschnitt eines Overspray-ableitungskanals der Filteranlage auf. Dieser Gehäusebereich ist dabei insbesondere ein fester Abschnitt des Overspray-Ableitungskanals. Er wird nicht ausgetauscht, sondern er verbleibt während des gesamten Verfahrens ein Bestandteil des Overspray Ableitungskanals.

In einem ersten Schritt erfolgt eine Entkopplung eines beladenen Trägheitsabscheiders gegenüber dem Gehäusebereich der Overspray-Filteranlage.

Darüber hinaus erfolgt eine gegenüber dem Trägheitsabscheider getrennte Entnahme eines beladenen Filtereinsatzes mit einem beladenen Flächenfiltermedium und einem Stützgittergestell und/oder Stützgestell aus dem Gehäusebereich.

Sodann erfolgt ein Einsetzen eines neuen Filtereinsatzes oder Einsetzen eines Filtereinsatzes mit einem neuen Flächenfiltermedium und dem Stützgittergestell und/oder Stützgestell.

Schließlich erfolgt ein Aufsetzen und/oder Einsetzen eines neuen Trägheitsfilters oder des beladene Trägheitsfilters auf oder in den Gehäusebereich mit dem eingesteckten Filtereinsatz.

Üblicherweise wird ein Einweg-Filtermodul oder ein Mehrweg-Filtermodul nur gesamtheitlich der Anlage entnommen. Dass lediglich ein Filtereinsatz als Feinfilter und ein Trägheitsfilter ausgetauscht wird und dass das Gehäuse des Feinfilters wiederverwendet wird, ist bislang nicht gekannt.

Da das Gehäuse des Trägheitsfilters einer höheren Anschmutzung ausgesetzt ist als das Gehäuse des Feinfilters, wird der Trägheitsfilter vollständig ausgetauscht.

Das vorliegende Verfahren stellt somit einen optimalen Kompromiss dahingehend dar, welche Bestandteile eines Filtermoduls ausgetauscht und entsorgt oder aufgearbeitet werden sollten und welche unverändert bleiben können.

So ist beispielsweise die Entsorgung eines Außengehäuses, wie dies im Stand der Technik erfolgt, mit deutlich mehr Abfallmaterial verbunden.

Bei der thermischen Aufarbeitung erreicht die Wärme bei Filtermodulen mit Außengehäuse, wie im Stand der Technik, nicht unmittelbar das Flächenfiltermedium, sondern ein Teil der Wärme wird durch die Gehäuseaußenwand abgefangen. Dadurch muss mehr Wärme bei einer Pyrolysereinigung aufgebracht werden, als eigentlich zur Pyrolyse des Flächenfiltermediums notwendig ist.

Man sieht also, dass der Austausch eines Filtereinsatzes anstelle eines ganzen Filtermoduls für die Entsorgung oder auch das Recycling einzelner Teile des Filtereinsatzes entscheidende Vorteile haben.

Weitere vorteilhafte Ausgestaltungen der Erfindung sind Gegenstand der Unteransprüche.

Der neue oder der beladene Trägheitsfilter kann vorteilhaft lösbar durch Formschluss oder Klemmkräfte an dem Gehäusebereich und/oder dem Filtereinsatz gehalten werden. Der Formschluss muss lediglich in und/oder entgegen der Einsteckrichtung des Filtereinsatzes in den Gehäusebereich erfolgen. Dadurch sind besonders einfache Kopplungsmechanismen realisierbar.

Der neue oder der beladene Trägheitsfilter kann besonders vorteilhaft durch Festlegen an dem Filtereinsatz aufgesetzt werden und dabei vorzugsweise formschlüssig mit dem Filtereinsatz verbunden, insbesondere verhakt, sein. Das Aufsetzen des Trägheitsfilters gemäß Schritt D ist dadurch auf einfache Weise realisierbar. Formschlussmittel können sich unter Wärme verformen. Allerdings können die Formschlussmittel an dem Filtereinsatz auf einfache Weise im Fall eines Recyclings überprüft und ggf. erneuert werden oder es werden im Fall eines Austauschs des gesamten Filtereinsatzes neue passgenaue Formschlussmittel bereitgestellt, welche noch nicht thermisch verformt sind.

Für eine möglichst optimale Positionierung des Filtereinsatzes innerhalb des Gehäusebereichs ist es von Vorteil, wenn das Einsetzen des neuen Filtereinsatzes oder des Filtereinsatzes mit dem neuen Flächenfiltermedium bis zu einem im Gehäusebereich angeordneten Anschlag erfolgt.

Ebenfalls bevorzugt bildet das Stützgittergestell und/oder das Stützgestell gemeinsam mit dem Flächenfiltermedium einen Taschenfilter mit V-förmigen Filtertaschen aus.

Das Flächenfiltermedium können vorteilhaft über die Rahmenwände oder über die Stützgitterwände verspannt sein. Die Lösung über Verspannung und Entspannung des Flächenfiltermediums erlaubt einen unkomplizierten Austausch des Mediums mit wenigen Handgriffen.

Vorzugsweise weist der Stützgestell oder das Stützgittergestell entsprechende Rahmenwände oder Stützgitterwände an, welche endständig aufeinander zulaufen, so dass das Flächenfiltermedium an den Kanten der Rahmenwände oder Stützgitterwände um zumindest 310°, vorzugsweise um mehr als 330°, besonders bevorzugt um mehr als 340°, umgelenkt ist. Entsprechend ist Schenkelabstand der jeweiligen Filtertasche durch die Formgebung des Stützgestells oder des Stützgittergestells und durch die Verspannung des Flächenfiltermediums gegen das Stützgestellt bzw. gegen das Stützgittergestell vorgegeben.

Ein Spannmittel oder mehrere Spannmittel zum Verspannen des Flächenfiltermediums, kann bzw. können insbesondere als Teil einer Verriegelungsvorrichtung ausgebildet sein. Sie sind vorzugsweise an einem eine Anströmöffnung randseitig einfassenden Rahmen oder an einer Anströmplatte oder an einer Stützgitterwand oder Rahmenwand angeordnet.

Es ist von Vorteil, wenn der Trägheitsfilter und/oder das Stützgittergestell und/oder Stützgestell zumindest bereichsweise oder vollständig aus einem metallischen pyrolysefesten Material besteht und dass der in Schritt A entnommene Trägheitsfilter und/oder der in Schritt B entnommene Filtereinsatz einer zumindest teilweisen thermischen Reinigung, vorzugsweise einer Pyrolyse von mehr als 500°C, unterzogen wird. Eine teilweise Reinigung bedeutet, dass die nicht-pyrolysefesten Bestandteile, z.B. das Flächenfiltermedium, pyrolysiert werden und die verbleibenden pyrolysefesten, z.B. metallische Bestanteile, oberflächengereinigt werden.

Es ist für die einfache Wiederherstellung des Filtereinsatzes nach der Pyrolyse ist es von Vorteil, wenn das Stützgittergestell und/oder Stützgestell des Filtereinsatzes eine Mehrzahl von Stützgitterwänden oder eine Mehrzahl von Rahmenwände und ein Flächenfiltermedium aufweist, wobei das Stützgittergestell und/oder Stützgestell eine Anströmplatte aufweist und wobei der Filtereinsatz senkrecht zur Flächennormalen der Anströmplatte zumindest bereichsweise offen ausgebildet ist und dass das Flächenfiltermedium zumindest an einzelnen Stützgitterwänden des Stützgittergestells und/oder des Stützgestells klemmend festgelegt ist und/oder formschlüssig festgelegt ist und/oder mittels von mechanischen Verbindungsmitteln festgelegt ist.

Bevorzugt weisen eines oder mehrere der Stützgitterwände zumindest ein Haltemittel, vorzugsweise zumindest einen Haken auf, durch welchen das Flächenfiltermedium gegen die Stützgitterwand gepresst wird und dadurch klemmend gehalten wird.

Die vorgenannten Spannmittel können als leistenförmige Elemente ausgebildet sein.

Die Spannmittel können mit dem Rahmen verrastet oder verriegelt sein. Entsprechend korrespondierende Rastelemente können am Rahmen angeordnet sein. Diese Variante bietet sich insbesondere dann an, wenn lediglich Rahmenwände zur Vorgabe der V-Form der Filtertaschen vorgesehen sind.

Alternativ oder zusätzlich kann die Festlegung des Flächenfiltermediums an der Stützgitterwand durch die mechanischen Verbindungsmittel mittels einer Textilpistole festgelegt werden, wobei die mechanischen Verbindungsmittel als Nadeln, Heftklammern, Heftfäden und/oder Sicherheitsfäden ausgebildet sind.

Das Flächenfiltermedium kann vorzugsweise durch eine Verriegelungsvorrichtung gegen das Stützgittergestell und/oder Stützgestell vorzugsweise gegen die Stützgitterwände und/oder die Anströmplatte verriegelt gehalten sein. Dadurch kann eine besonders einfache Entnahme durch Lösen der Verriegelung erreicht werden.

Weiterhin kann die Schnittstelle zwischen dem Filtereinsatz und dem Trägheitsfilter vor oder entlang der stirnseitigen Kantenflächen des Gehäusebereichs verlaufen.

Der Gehäusebereich kann dabei während der Ausführung der Schritte A-D als ein Teil des Overspray-Ableitungskanals verbleiben.

Weitere vorteilhafte Ausgestaltungen des Filtereinsatzes sind nachfolgend beschrieben.

Das Stützgittergestell des Filtereinsatzes umfasst dabei eine Mehrzahl von Stützgitterwänden und mit dem besagte Flächenfiltermedium. Alternativ kann ein Stützgestell mit einer Mehrzahl aus Rahmenwänden vorgesehen sein. Diese Rahmenwände weisen kein Gitter innerhalb der Rahmenstruktur auf. Bei dieser Variante erfolgt eine geringere Stützung. Die Halterung erfolgt teilweise ebenfalls über eine Stützung und stärker über eine Verspannung des Flächenfiltermediums. Zur die geringere Auflagefläche erfolgt im Fall eines Oversprays mit sehr klebrigen Anteilen eine verringerte Anhaftung an der Oberfläche der Wände, so dass dieses Flächenfiltermedium einfacher austauschbar ist. Das Stützgittergestell und/oder Stützgestell weist die vorgenannte Anströmplatte auf, wobei der Filtereinsatz senkrecht zur Flächennormalen der Anströmplatte, insbesondere jenseits zweier sich gegenüberliegenden Kanten der Stützgitterwände, zumindest bereichsweise offen ausgebildet ist. Durch die offene Ausbildung kann aufgrund des Entstehens von Bypässen bei dem Filtereinsatz noch nicht von einem Filtermodul, nach dem allgemeinen Verständnis der Filtertechnik, gesprochen werden. Die offene Ausbildung würde Bypass-Leitungen für den Overspray-Gasstrom bereitstellen, so dass das Overspray seitlich an den Stützwänden vorbeigeleitet wird. Erst durch ein auf den Filtereinsatz abgestimmtes umfangsgeschlossenes Außengehäuse können diese Bypässe geschlossen werden. Während das Außengehäuse allerdings materialschonend und vorteilhaft als Teil der Filteranlage, z.B. eines Overspray-Leitkanals, ausgebildet sein kann, ist bevorzugt lediglich der Filtereinsatz und nicht das gesamtheitliche Filtermodul, der entnehmbare Bestandteil der Filteranlage.

Zugleich bietet die Außenkontur des Filtereinsatzes nur eine geringe Auflagefläche gegenüber dem Außengehäuse, was ein Verbacken durch Lackanlagerungen erschwert und die Entnahme erleichtert. Bei einem Filtermodul hingegen kann es bei einer vollflächigen Auflage mit einem fest-installierten Overspray-Kanal zu Erschwerungen bei der Entnahme des Filtermoduls kommen.

Insgesamt ist durch die skelettierte Ausgestaltung des Filtereinsatzes ein deutlich geringerer Entsorgungsaufwand gegenüber einem Filtermodul, welcher durch geschickte Materialauswahl und Ausgestaltung der Bestandteile des Filtereinsatzes noch weiter optimiert werden kann. Zudem erreicht die Wärme bei der Pyrolyse die Oberfläche deutlich einfacher und direkter.

Mechanische Verbindungsmittel im Kontext mit der Befestigung durch eine Textilpistole sind typischerweise kleinteilige Elemente wie Schrauben, Nieten, Nadeln und dergleichen. Im Fall einer Textilpistole sind die bevorzugt-eingesetzten Verbindungsmittel Nadeln, Heftklammern, Heftfäden und/oder Sicherheitsfäden. Insbesondere können die Verbindungsmittel aus einem formstabilen pyrolyselabilen Material, wie z.B. einem Kunststoff, ausgebildet sein, welches sich unter Pyrolysebedingungen zersetzt oder zumindest seine Formstabilität verliert.

Die Stützgitterwände weisen zumindest eine Ausnehmung, insbesondere eine zentrale Ausnehmung auf. Für die Stützfunktion sind in der Ausnehmung Stützstreben angeordnet.

Insbesondere durch die Ausnehmung weist die Stützgitterwand eine Öffnungsfläche auf, dabei ist der Anteil der Öffnungsfläche in Bezug auf die Gesamtfläche der Stützgitterwand zumindest 70%, vorzugsweise zwischen 75-95 %. Diese große Öffnungsfläche verhindert ein Verblocken des Filtermediums und erlaubt ein Abströmen der gereinigten Luft mit einem vergleichsweise geringen Druckverlust.

Einzelne Stützgitterwände sind paarweise V-förmig zueinander angeordnet. Diese Stützgitterwandpaare weisen ihre V-Form auf, die von einer Anströmseite in Richtung einer Abströmseite spitz zuläuft.

Der Filtereinsatz ist bevorzugt senkrecht zur Flächennormalen der Anströmplatte und vorzugsweise endständig an den Stützgitterwänden beidseitig offen ausgebildet.

Das Flächenfiltermedium ist vorteilhaft, vorzugsweise durch einen Verriegelungsvorrichtung, gegen das Stützgittergestell und/oder Stützgestell, vorzugsweise gegen die Stützgitterwände und/oder gegen die Anströmplatte, verriegelt. Die Verriegelung kann alternativ oder insbesondere zusätzlich zur vorbeschriebenen Verklemmung erfolgen, da dadurch die Klemmhalterung zusätzlich stabilisiert werden kann. Insgesamt kann eine Verriegelung typischerweise leicht gelöst werden, so dass die Handhabung und das Lösen dieser Befestigung zur Entnahme des Flächenfiltermediums einfach und intuitiv ausgebildet ist.

Die Verriegelungsvorrichtung kann überdies Riegelstangen aufweisen, welche das Flächenfiltermedium gegen die Stützwände und/oder die Anströmplatte verriegelt. Riegelstangen weisen eine geringe Abscheideoberfläche und eine gute Stabilisierungswirkung des Flächenfiltermediums gegen ein Durchbiegen des Filtermediums auf.

Das Stützgittergestell und/oder Stützgestell kann, insbesondere randseitig, eine U-förmige Randkontur aufweisen, wobei die Schenkel der Randkontur durch zwei Kanten von randseitigen Stützgitterwänden gebildet werden, wobei die zwei jeweils randseitigen Stützgitterwände vorzugsweise parallel zueinander verlaufen. Dadurch weist das Stützgittergestell und/oder Stützgestell eine besondere mechanische Stabilität auf.

Bevorzugt für einen besonders hohen Filtergrad kann das Flächenfiltermedium eine mittlere Filtermediendicke im unkomprimierten Zustand von zumindest 5 mm, vorzugsweise 18-30 mm, aufweisen. Derart dicke Filtermedien weisen bei einer stoffschlüssigen Verbindung eine geringe Stabilität und eine hohe Rückstellkraft auf. Somit kann sich die stoffschlüssige Verbindung eines dicken Filtermediums bei höherem Drücken von Overspray-Strömen sehr leicht lösen. Auch die Gefahr eines Auftrennens des Filtermediums bei entsprechend hohen Drücken ist bei dicken Filtermedien erhöht. Die vorbeschriebene Halterung des Filtermediums bewirkt hier eine besondere Stabilisierung. Die erfindungsgemäße Variante der Festlegung eines derart dicken Filtermediums, insbesondere die klemmende oder stoffschlüssige Halterung, ist daher gegenüber anderen Festlegungsvarianten von Vorteil.

Das Material des Flächenfiltermediums ist vorteilhaft aus einem Vlies, vorzugsweise aus einem cellulosefaserhaltiges Vlies, und/oder einem Textilstoff gebildet. Diese Stoffe sind üblicherweise einfach und kontrolliert, z.B. durch Pyrolyse, zu entsorgen.

Bevorzugt ist das Flächenfiltermedium zickzack-gefaltet.

Das Material der Stützgitterwand kann materialsparend aus einem pyrolysefesten Material bei Temperaturen von zumindest 500°C bestehen, vorzugsweise aus einem Metallblech.

Eines der Stützgitterwandpaare vorzugsweise aus zwei unmittelbar miteinander verbundenen Stützgitterwänden, welches benachbart zu den randseitigen Stützgitterwänden angeordnet ist, kann zur besseren Stabilität des Filtereinsatzes Verbindungsmittel zu den randseitigen Stützgitterwänden aufweisen.

Überdies können die Stützgitterwände mit Abkantungen versehen sein, an welchen die Haltemittel festgelegt sind. Dadurch weisen die Haltemittel eine besonders hohe mechanische Stabilität auf.

Die Haltemittel können in der Ausgestaltung als Haken Laschen mit Durchtrittsöffnungen aufweisen, welche in platzsparender Art und Weise Teil der Verriegelungsvorrichtung sind.

Die Stützgitterwände und/oder die Rahmenwände weisen eine anströmseitige und eine abströmseitige Oberfläche auf. Dabei ist das Flächenfiltermedium auf der abströmseitigen Oberfläche der jeweiligen Wände angeordnet.

Anders ausgedrückt ist das Flächenfiltermedium "von hinten" angeordnet, so dass die Wandung zunächst durchströmt wird und das Overspray erst danach auf das Flächenfiltermedium trifft. Diese Anordnung "von hinten" ermöglicht einen besonders einfachen Austausch des Flächenfiltermediums nach der Entnahme des Filtereinsatzes.

Zwischen den Stützgitterwänden der jeweiligen Stützgitterwandpaare können vorteilhaft kantenseitig eine Verbindungsplatte ausgebildet sein, wodurch einzelne anströmseitige Bypassbereiche geschlossen werden können. Zwischen den Stützgitterwandpaaren allerdings ist die Ausgestaltung nach wie vor offen ausgebildet

In den nachfolgend-beschriebenen Figuren ist eine beispielhafte Ausführungsform der Erfindung dargestellt. Es zeigen:
- Fig.1: eine perspektivische Explosionsansicht eines erfindungsgemäßen Filtereinsatzes,
- Fig.2: eine Draufsicht auf den Stützgittergestell des Filtereinsatzes der Fig. 1
- Fig.3: Teilausschnitt des Filtereinsatzes der Fig.1 und 2;
- Fig. 4: vergrößerter Teilausschnitt des Filtereinsatzes der Fig. 1-3;
- Fig. 5: Perspektivansicht des Filtereinsatzes der Fig. 1-4;
- Fig. 6: Perspektivansicht eines Filtermoduls umfassend den Filtereinsatz in einem Gehäusebereich und einen darauf aufgesetzten Trägheitsfilter;
- Fig. 7: Schnittansicht des Filtermoduls umfassend den Trägheitsfilter;
- Fig. 8: Perspektivansicht des Filtermoduls mit den demontierten Filterbauteilen;
- Fig. 9: Detailansicht der Anbindung des Trägheitsfilters an die übrigen Filterbauteile des Filtermoduls;
- Fig. 10: Perspektivansicht eines Stützgestells eines alternativen Filtereinsatzes;
- Fig. 11: Perspektivansicht eines Filtereinsatzes mit dem Stützgestell der Fig. 10;
- Fig. 12: Explosionsansicht des Stützgestells der Fig. 10 mit abgesetzten Fixierleisten; und
- Fig. 13: Fixierung des Flächenfiltermediums an dem Stützgestell der Fig. 10-12.

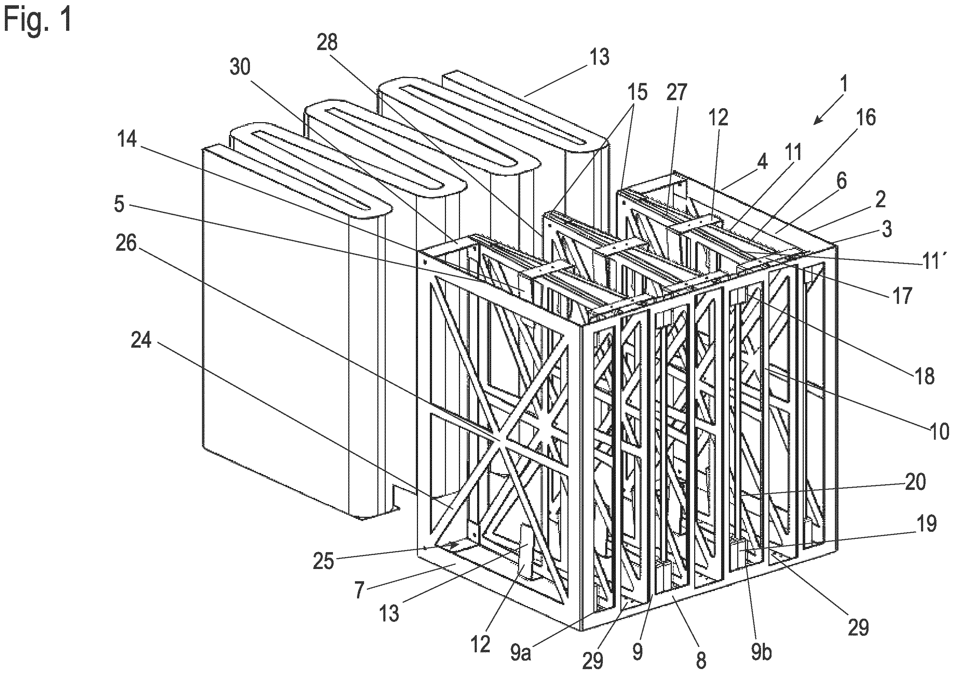

Fig. 1 zeigt einen Filtereinsatz 1, welcher in ein nicht-dargestelltes kastenförmiges Gehäuse einer Filteranlage einer Lackieranlage eingesetzt werden kann. Dabei ist das besagte kastenförmige Gehäuse fester Bestandteil der Filteranlage und der Lackieranlage während der Filtereinsatz austauschbar innerhalb des Gehäuses angeordnet ist.

Die Festlegung des Filtereinsatzes 1 innerhalb des Gehäuses kann bevorzugt durch einen Kraftschluss oder Formschluss erfolgen und besonders bevorzugt ohne Einsatz von zusätzlichen mechanischen Verbindungsmitteln, wie Schrauben, Nieten und dergleichen.

Der Filtereinsatz 1 weist ein Stützgittergestell 2 mit einem Flächenfiltermedium 13 auf.

Das Stützgittergestell 2 weist eine U-förmige Randkontur 3 auf, wobei je eines der beiden Schenkel 4 und 5 durch eine Stützgitterwand 6 und 7 gebildet werden. Diese Stützgitterwände liegen im eingebauten Zustand zumindest bereichsweise an dem Gehäuse der Filteranlage an.

Der Bodenabschnitt der U-förmigen Randkontur 3 wird durch die Kante einer Anströmplatte 8 gebildet. Die Anströmplatte 8 bildet die Anströmseite des Filtereinsatzes 1 aus. Sie weist Durchtrittsöffnungen 9 in Form von Einlassschlitze 9a auf.

Die Einlassschlitze 9a, 9b erstrecken sich in ihrer Längserstreckung bevorzugt zumindest über 80%, vorzugsweise über mehr als 90%, der Länge der Anströmplatte 8. Die Einlassschlitze 9a sind zueinander parallel ausgerichtet.

Zwischen den Einlassschlitzen 9a, 9b sind Trennstege 10 angeordnet, welche in ihrer Breite senkrecht zur Längserstreckung der Einlassschlitze weniger als 30%, vorzugsweise weniger als 20%, der Breite der Einlassschlitze 9a aufweisen.

Dadurch wirken die Trennstege nur in geringem Maße als Trägheitsabscheider für einen Overspray-Luftstrom, so dass es zu keiner unerwünschten übermäßigen Partikelabscheidung entlang der Stirnseite der Anströmplatte kommt.

Zwischen den Stützgitterwänden 6 und 7 sind eine oder mehrere weitere Stützgitterwände 11 angeordnet. Dabei sind jeweils zwei Stützgitterwände 11, 11' paarweise V-förmig zueinander angeordnet. In Fig. 1 sind insgesamt drei Stützgitterwand-Paare angeordnet. Es sind allerdings auch mehr oder weniger Stützgitterwandpaare denkbar.

Einzelne Stützgitterwände, vorzugsweise die Stützgitterwände 11, 11' aller Stützgitterwandpaare, weisen Haltemittel 12 auf, zur Befestigung eines Flächenfiltermediums 13.

Das Flächenfiltermedium 13 kann aus einem Vlies- oder Textilfiltermedium ausgebildet sein. Das Flächenfiltermedium kann ein- oder mehrlagig ausgebildet sein.

Insbesondere kann das Flächenfiltermedium eine mittlere Dicke aufweisen, welche größer ist als die Hälfte der Breite des Einlassschlitzes 9b zwischen zwei Stützgitterwandpaaren.

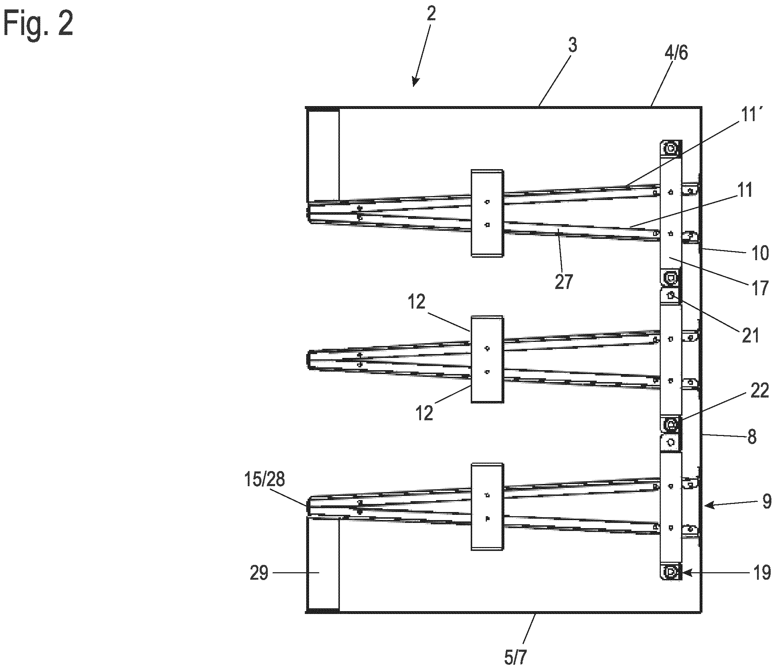

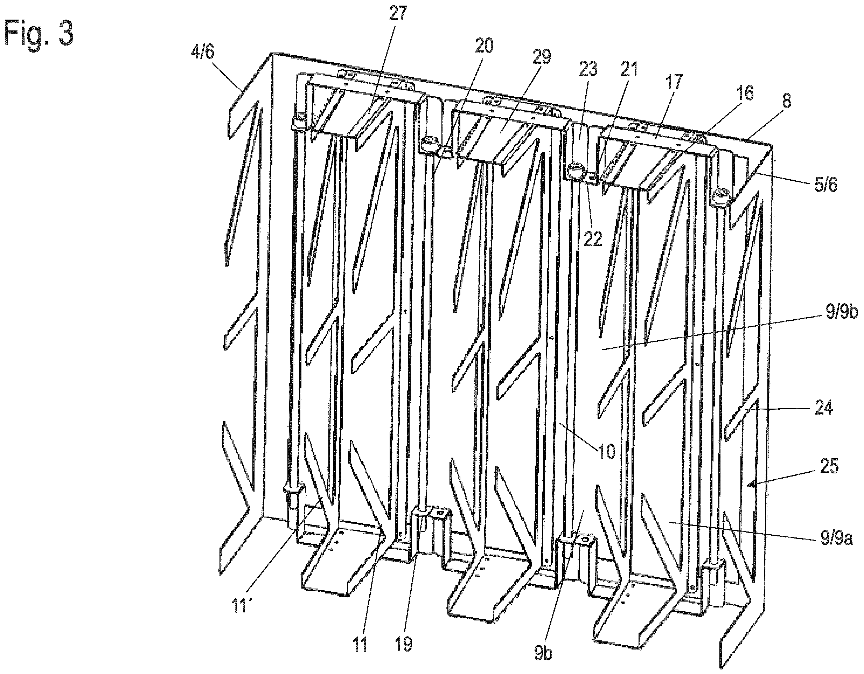

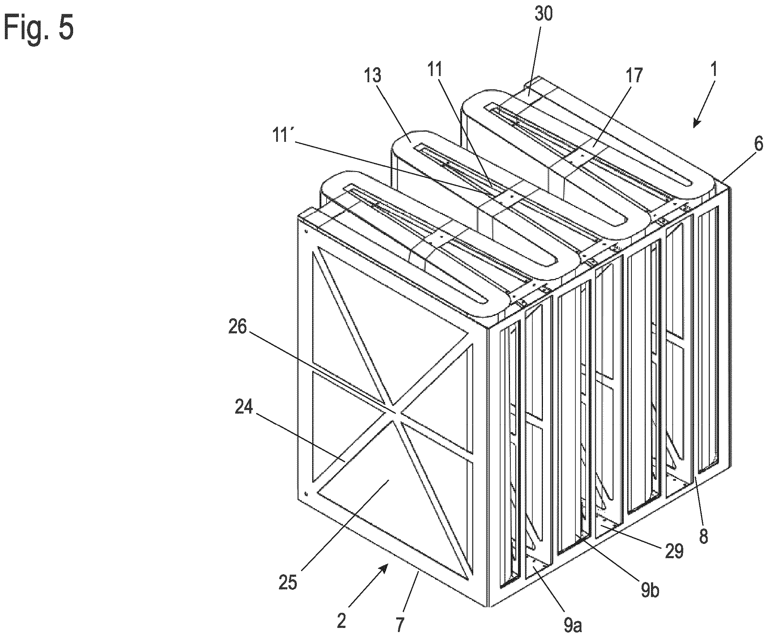

Die Haltemittel 12 in Fig. 1-5 sind als Haken, vorzugsweise mit einer u-Förmigen Ausgestaltung, ausgebildet. Die Haken weisen einen Schenkel 14 auf, welcher sich in den Zwischenraum zwischen zwei Stützwandpaare erstreckt.

Dadurch wird das Flächenfiltermedium 13 randseitig klemmend gehalten. Die Haken sind in einem Mittelbereich der Kante 16 einer jeden Stützwand 11, 11' zwischen der Einströmöffnung 9a eines Stützwandpaares und einem spitz-zulaufenden Endbereich 15 des Stützwandpaares angeordnet.

Die Haltemittel, insbesondere in der Ausgestaltung als Haken, sind im Wesentlichen entlang einer ersten Ebene angeordnet, welche parallel zur Anströmplatte 8 angeordnet ist.

Endständig, also im letzten Drittel der Kante 16, sind nahe der Anströmplatte 8 weitere Haltemittel 17, insbesondere in Form von Haken ausgebildet. Die Ausgestaltung der Haken kann sich vorteilhaft in gleicher Weise in den Zwischenraum erstrecken wie die Haltemittel 12.

Vorteilhaft sind die als Haken ausgebildete Haltemittel 17 entlang einer zweiten Ebene angeordnet, welche parallel zur Anströmplatte 8 angeordnet ist. Wie bei den Haltemitteln 12 wird auch bei diesen Haken das Flächenfiltermedium 13 zwischen den Schenkeln 18 der Haken und der jeweiligen Stützwand 11, 11' randseitig klemmend gehalten.

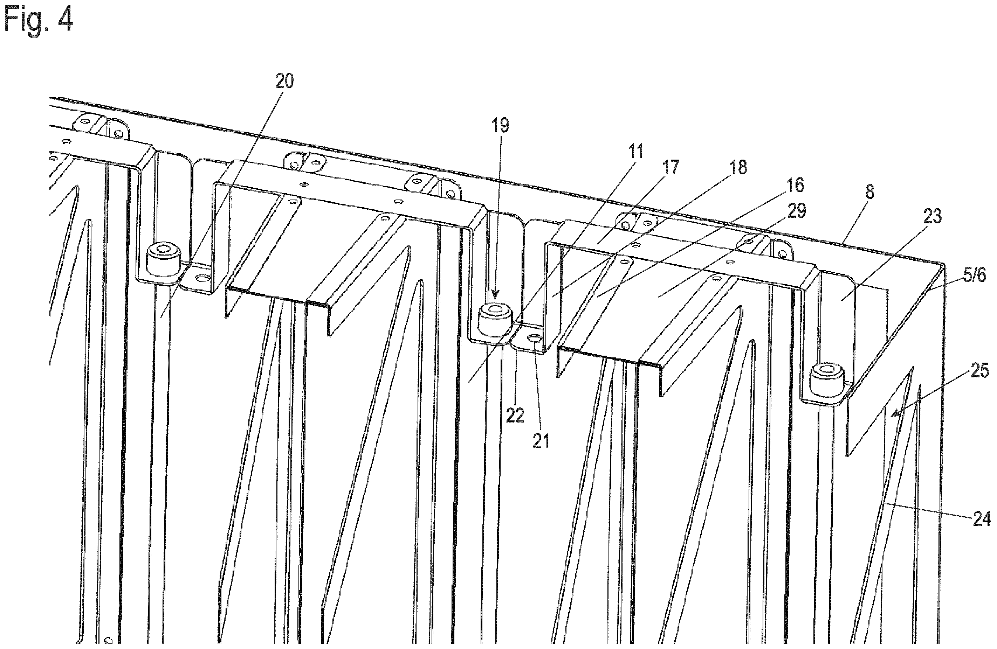

Weiterhin weist der Filtereinsatz 1 eine Verriegelungsvorrichtung 19 auf. Diese verriegelt das Flächenfiltermedium in dem Stützgittergestell 2, vorzugsweise gegen die Stützgitterwände 11, 11'. In Fig. 4 weist die Verriegelungsvorrichtung 19 eine oder mehrere Riegelstangen 20 auf. Die Riegelstangen 20 erstrecken sich bevorzugt in den Zwischenräumen zwischen zwei Stützwandpaaren.

Weiterhin weist die Verriegelungsvorrichtung 19 Durchführungsöffnungen 21 an einer oder mehreren Stützgitterwänden 11, 11' auf, in welche die Riegelstangen 20 einsteckbar sind und gehalten. Vorzugsweise weist zumindest eines, vorzugsweise jedes, der Stützgitterwände eines Stützgitterwandpaars zwei in Längsrichtung des Einlassschlitzes 9a gegenüberliegende Laschen 22 mit den Durchführungsöffnungen 21 auf. Die Laschen 22 sind in der Variante der Fig. 4 platz- und materialsparend endständig an den Haltemitteln 17 angeordnet. Zur Stabilisierung der als Haken ausgebildeten Haltemittel, ist der Schenkel 18 als Winkelschenkel ausgebildet mit einer Winkelfläche 23, die an der Anströmplatte 8 angeordnet ist.

Die Stützgitterwände 11, 11' weisen vorzugsweise Stützstreben 24 zur Stabilisierung auf. Zur Schaffung einer großen Anströmfläche nimmt der Öffnungsbereich 25 der Stützgitterwand 11, 11' mehr als 70%, vorzugsweise mehr als 80%, der gesamten Fläche der Stützgitterwand 11, 11' ein. Der Öffnungsbereich 25 wird durch die besagten Stützstreben 24 unterbrochen, welche vorzugsweise kreuzweise zueinander angeordnet sind. Dabei verlaufen mehrere Stützstreben 24, vorzugsweise alle Stützstreben, durch einen Kreuzungspunkt 26. Die Stützstreben sind flach ausgebildet, so dass die Stützgitterwand eine einheitliche Wandstärke aufweist.

Das Stützgittergestell 2 kann vorteilhaft aus einem Metall, z.B. Edelstahl, oder aus einem anderen vorzugsweise pyrolysefesten Material gefertigt sein. Auch nicht pyrolysefestes Material z.B., Kunststoff oder Pappe, kann eingesetzt werden. So ist es auch möglich das Flächenfiltermedium vor einer Pyrolysebehandlung oder vor einer anderen Entsorgung auszutauschen.

Das Flächenfiltermedium kann nicht pyrolysefest, z.B. bei Temperaturen von mehr als 500°C, vorzugsweise sogar mehr als 300°C, ausgebildet sein.

Die Stützgitterwände 11, 11' eines Stützgitterwandpaares weisen an den Außenkanten eine winklige Abkantungsfläche 27 auf. Diese Abkantungsfläche 27 dient der Festlegung der Haltemittel 12, beispielsweise durch eine Verschweißung und/oder durch eine Verschraubung oder durch eine andere Art der Befestigung.

Die Stützgitterwände 11, 11' eines Stützgitterwandpaares weisen einen Winkel von weniger als 20°, vorzugsweise 5-15° zueinander auf. Der Winkelscheitel des Winkels wird vorteilhaft durch jeweils eine Kante 28 je einer Stützgitterwand 11, 11'eines Stützgitterwandpaares gebildet.

Sie beiden Stützgitterwände 11, 11' eines Stützgitterwandpaares sind endständig in senkrechter Richtung zur Anströmrichtung durch Verbindungsplatten 29, vorzugsweise mit spitz-zulaufender Form, verbunden. Die Verbindungsplatten verschließen das Stützgitterwandpaar endständig zur Vermeidung einer unerwünschten Bypass-Umleitung des Oversprays um das Flächenfiltermedium 13 herum.

Für eine bessere Formstabilität sind die außenseitigen Stützgitterwände 6 und 7 des Stützgittergestells 2 sind über Kopplungsmittel 30 mit den benachbarten Stützgitterwänden 11, 11' der jeweiligen benachbarten Stützgitterwandpaaren verbunden.

Die Kopplungsmittel 30 sind besonders bevorzugt abströmseitig an dem Stützgittergestell angeordnet.

Eine weitere Besonderheit der vorliegenden Erfindung ist die Austauschbarkeit des Filtereinsatzes 1 in einem Gehäusebereich 100 welcher als fester untrennbarer Bestandteil eines Overspray-Ableitungskanals einer Filteranlage ausgebildet ist.

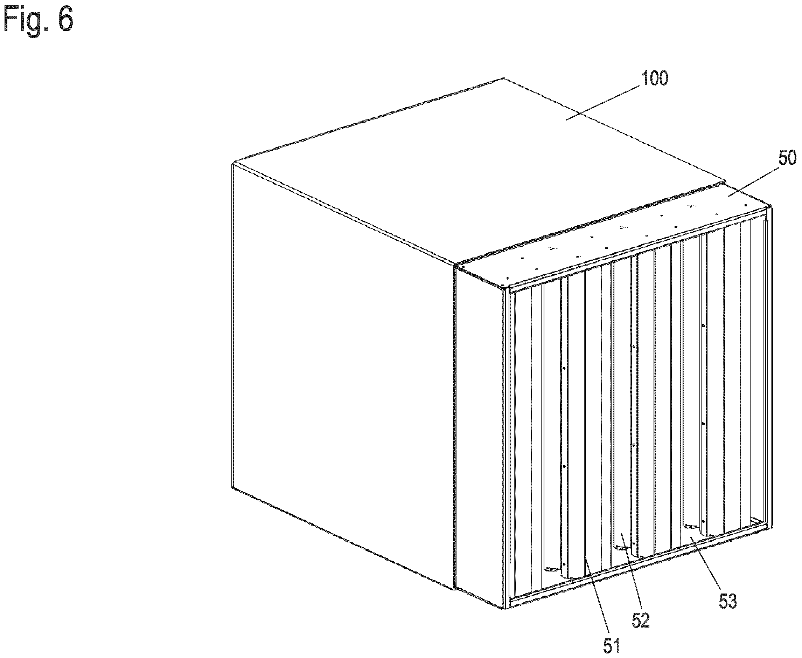

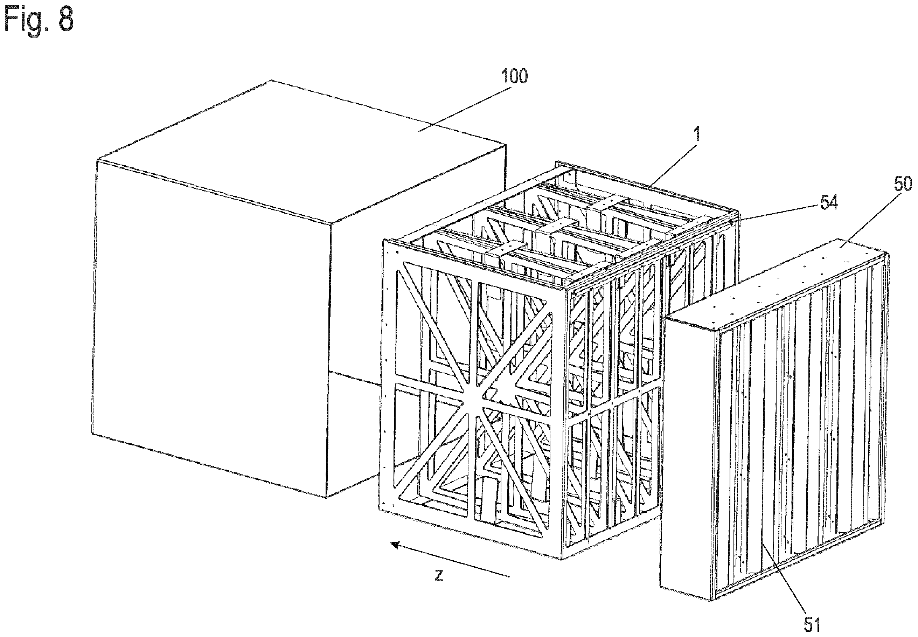

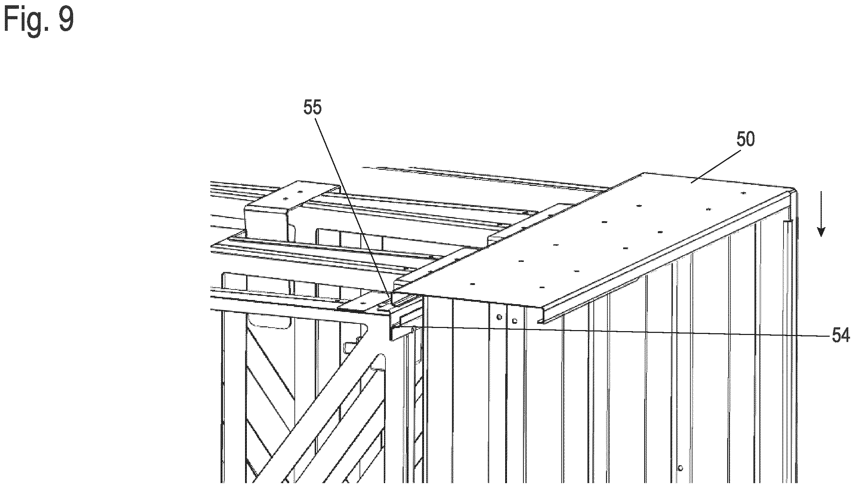

In an sich bekannter Art und Weise ist vor dem als Feinfilter ausgebildeten Filtereinsatz 1 ein Trägheitsabscheider 50 als Grobfilter angeordnet. In Fig. 6-9 besteht der Trägheitsfilter 50 aus einem umlaufenden Rahmen 53 sowie zwei versetzt zueinander angeordnete Reihen aus Halbrohren.

Vorzugsweise können alle Abscheideelemente des Trägheitsabscheiders 50 von zumindest zwei in Durchströmungsrichtung hintereinander geordneten Reihen an Abscheideelementen jeweils einen identischen Querschnitt aufweisen. Besonders bevorzugt kann dieser Querschnitt als ein Halbrohr-Querschnitt ausgebildet sein. Ein Halbrohr entspricht einem Rohr welches in Längsrichtung durchgeteilt ist.

Dabei kann es sich um ein übliches Rundrohr handeln oder auch um ein Mehrkantrohr mit mehr als 4 Kanten. Mehrkantrohre sind insbesondere bei cellulosebasierten Materialien für die Abscheideelemente von Vorteil, da sich Werkstoffe wie Pappe und dergleichen oftmals leichter in die Halbrohrform knicken als biegen lassen. Zugleich ermöglichten die Kanten bessere Verwirbelungseffekte und damit eine höhere Abscheidung.

Dabei definieren die Halbrohre 51 einer ersten Reihe eine erste Öffnungsrichtung und die Halbrohre 52 der zweiten benachbarten Reihe definieren eine zweite Öffnungsrichtung, wobei die jeweiligen Öffnungsrichtungen der Halbrohre 51 der ersten Reihe in Bezug auf die Halbrohre 52 der zweiten Reihe parallel zueinander und in entgegengesetzten Richtungen verlaufen.

Weiterhin sind die Halbrohre 51 einer ersten Reihe mit einem Querversatz von zumindest einem mittleren Radius r gegenüber der zweiten benachbarten Reihe 52 innerhalb des Rahmens 53 angeordnet.

Der Trägheitsabscheider 50 und der Filtereinsatz 1 bilden gemeinsam mit dem Gehäusebereich 100 ein Filtermodul aus, wobei nach dem materialsparenden Konzept der vorliegenden Erfindung nur der Trägheitsabscheider 50 oder der Filtereinsatz 1 des besagten Filtermoduls ausgetauscht bzw. ersetzt wird. Dabei ist der Trägheitsabscheider 50 lediglich auf den Filtergehäusebereich 100 aufgesetzt und festgelegt.

Zur Kopplung mit dem Trägheitsabscheider 50 weist der Filtereinsatz anströmseitig ein Koppelmittel 54, z.B. in Form eines Winkelprofils, auf. Das Winkelprofil bildet dabei eine u-förmige längliche Aufnahme 58 aus

Der Trägheitsabscheider 50 weist ein korrespondierendes Koppelmittel 55 auf, welches in Fig. 6-9 vorzugsweise am Rahmen 53 des Trägheitsabscheiders 50 angeordnet ist. Das Koppelmittel ist u-förmig ausgebildet mit einem Auflageschenkel 56 und einem dazu endständig angeordneten Beabstandungsschenkel 57. Der Beabstandungsschenkel dient dem Spielausgleich innerhalb der Aufnahme 58. Der Auflageschenkel 56 kann bevorzugt parallel zu einem Schenkel der Aufnahme 58 verlaufen und besonders bevorzugt an diesem anliegen.

Die korrespondierenden Koppelmittel 54 und 55 werden ineinander eingeführt, so dass ein Formschluss in oder entgegen der Einsteckrichtung Z gebildet wird.

Bevorzugt wird dabei das Koppelmittel 55 des Trägheitsabscheiders senkrecht zur Einsteckrichtung Z des Filtereinsatzes in die Aufnahme 58 eingeführt.

Alternativ kann das Koppelmittel 54 auch am Gehäusebereich 100 angeordnet sein.

Zur Positionierung des Filtereinsatzes 1 weist der Gehäusebereich 100 einen Anschlag, z.B. eine Anschlagleiste, aufweisen. Im Rahmen des erfindungsgemäßen Verfahrens erfolgt daher eine Bereitstellung eines solchen Filtermoduls in der erfindungsgemäßen Overspray-Filteranlage wie folgt:
Als erster Schritt 201 erfolgt die Entkopplung eines beladenen Trägheitsabscheiders 50 gegenüber dem Gehäusebereich 100 der Overspray-Filteranlage.

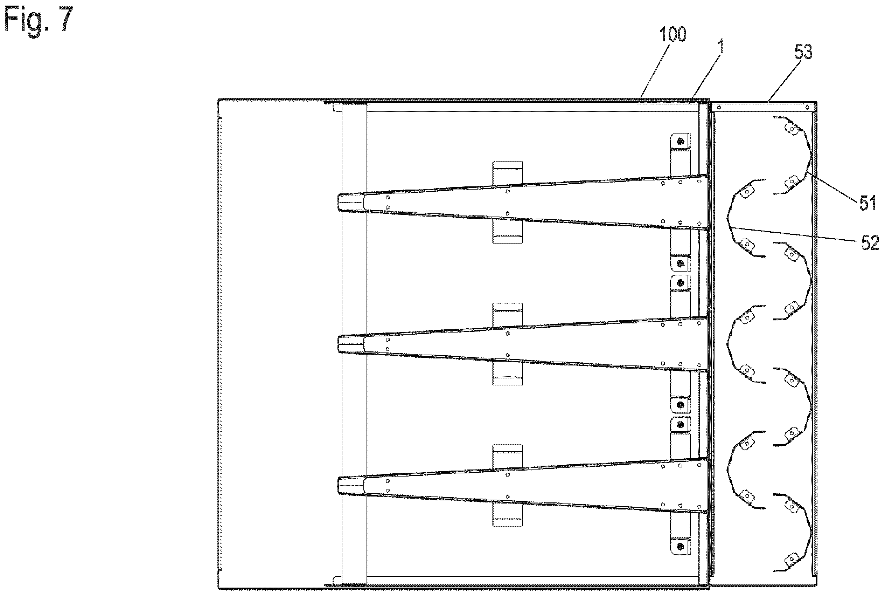

Als zweiter Schritt 202 erfolgt eine getrennte Entnahme des beladenen Filtereinsatzes 1 aus dem Gehäusebereich 100. Aus Gründen der Übersichtlichkeit ist in Fig. 6 und 7 lediglich das Stützgittergestell 2 dargestellt. Es versteht sich allerdings, dass dieses mit einem in Fig. 6 und 7 nicht-dargestellten Flächenfiltermedium, analog zur Variante der Fig. 1-5, versehen ist.

In einem dritten Schritt 203 erfolgt ein Einsetzen eines neuen Filtereinsatzes 1' oder das Einsetzen eines Filtereinsatzes 1' mit einem neuen Flächenfiltermedium und dem alten Stützgittergestell 2. Das Einsetzen erfolgt in Einschubrichtung Z bis zu einer durch den Anschlag 101 vordefinierten Position innerhalb des Gehäusebereichs 100.

In einem vierten Schritt erfolgt das Aufsetzen eines neuen Trägheitsfilters 50' oder des alten Trägheitsfilters 50 auf den Gehäusebereich 100 mit dem eingesteckten Filtereinsatz 1. Diese Entscheidung des Austauschs des Trägheitsfilters kann u.a. vom Beladungsgrad dieser Filterstufe abhängen, der oftmals anders ist als der Beladungsgrad des Feinfilters bzw. des Filtereinsatzes 1'.

Die Möglichkeit des getrennten Austausches der beiden vorgenannte Filterbauteile erlaubt eine optimale und insbesondere materialsparende Nutzung der Filterelemente, z.B. des Flächenfiltermediums und der Halbrohre, innerhalb der Filterbauteile, so dass das jeweilige Filterbauteil tatsächlich effizient bis zum Erreichen seiner Maximalbeladung genutzt werden kann.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

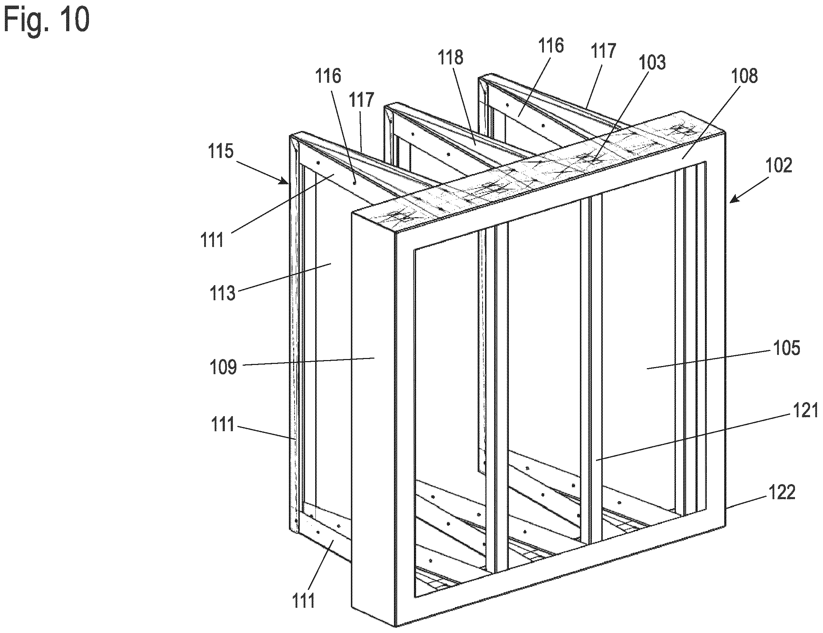

Fig. 10-zeigt ein metallisches Stützgestell 102 einer weiteren Ausführungsvariante eines Filtereinsatzes 110 zur gemeinsamen Anordnung mit einem Trägheitsfilter im Rahmen eines erfindungsgemäßen Verfahrens. Dieser weist eine Anströmöffnung 105 auf, welche von einem Rahmen 122 eingefasst ist. Der Rahmen 122 umfasst eine stirnseitige Anströmplatte 108 und einen in Strömungsrichtung erstreckenden rechteckigen Rahmenkragen 109. Am Rahmenkragen 109 sind Rahmenwände fixiert, welche sich in Strömungsrichtung erstrecken. Die Rahmenwände 116 sind von zumindest drei Seiten von Rahmenleisten 111 gebildet und weisen einen mittleren großflächigen Freibereich 113 auf.

Die ebenen Rahmenwände 116 und 117 verlaufen in Strömungsrichtung aufeinander zu, so dass die Rahmenwände einen die Schenkel einer V-Form bilden und dass der Verbindungsbereich beider Rahmenwände den Scheitel 115 einer V-Form bilden. Der Scheitel verläuft leistenartig senkrecht zur Strömungsrichtung.

Senkrecht zur dem von den Rahmenwänden 116 und 117 gebildeten Scheitel 115 sind geschlossene Endflächen 118 zwischen den Rahmenleisten zweier Rahmenwände 116 und 117 angeordnet, um Bypass-Strömungen am Flächenfiltermedium 112 vorbei zu verhindern.

Im Bereich des Rahmens 122 sind leistenförmige Spannmittel 121 angeordnet, welche lösbar am Rahmen 122 angeordnet sind. Dies kann durch Verrastung oder Verriegelung erfolgen. Die leistenförmigen Spannmittel 121 sind vorzugsweise rinnenartig mit einem Rinnenboden und zwei randseitigen Rinnenschenkel ausgebildet, wobei die Schenkel gegenüber den Rinnenboden entgegen der Einströmrichtung hervorstehen.

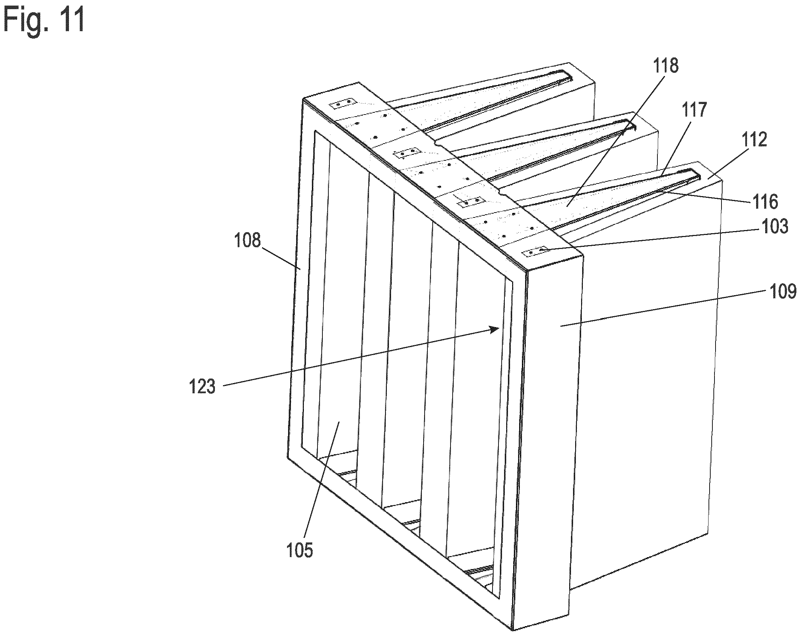

Fig. 11 zeigt den Rahmen in teiltransparenter Darstellung mit eingelegtem Flächenfiltermedium 112. Dabei erkennt man, dass das Flächenfiltermedium entgegen der Strömungsrichtung auf der strömungsabgewandten Oberfläche der Rahmenwand 116, 117 angeordnet ist.

Die jeweiligen Rahmenwände 116, 117 oder die alternativ dazu verwendbaren Stützgitterwände können an dem Rahmen 122 formschlüssig angeordnete, vorzugsweise verschweißt, sein. Das Filtermedium 112 ist gegen die Rahmenwände 116, 117 gepresst an dem Stützgestell 102 festgelegt. Die Festlegung erfolgt durch ein Verspannen des Flächenfiltermediums. Das Spannmittel 121 ist am Rahmen 122 verrastet und/oder verriegelt. Hierfür kann der Rahmen ein korrespondierendes Rastmittel 103 einer Verriegelungsvorrichtung 119 aufweisen, welches in Fig. 11 am Rahmen 122 angedeutet ist. Die Gegenspannmittel zu den Spannmitteln 121 bilden die Rahmenwände 116, 117 und deren endständige miteinander verbundene Rahmenkanten.

Die leistenförmigen Spannmittel 103 können miteinander verbunden sein, so dass lediglich ein Spannmittel vorgesehen sein kann.

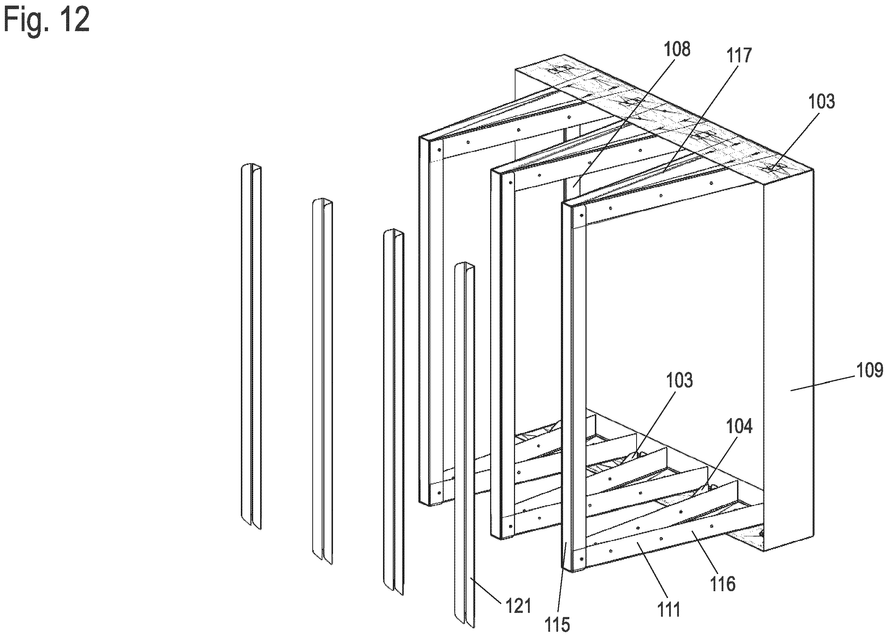

Fig. 12 zeigt nochmals die Spannmittel 103 und die korrespondierenden Rastmittel. Dabei werden die Spannmittel 103 einseitig - oben - auf einen Vorsprung oder hinter einer Auflaufkante aufgesteckt. Auf der Unterseite ist eine Auflaufkante 104, welche vom Spannmittel bis zum Erreichen der Endposition überfahren wird. Zum Lösen des Spannmittels 121 muss die Auflaufkante 104 oder das Spannmittel 103 verformt werden.

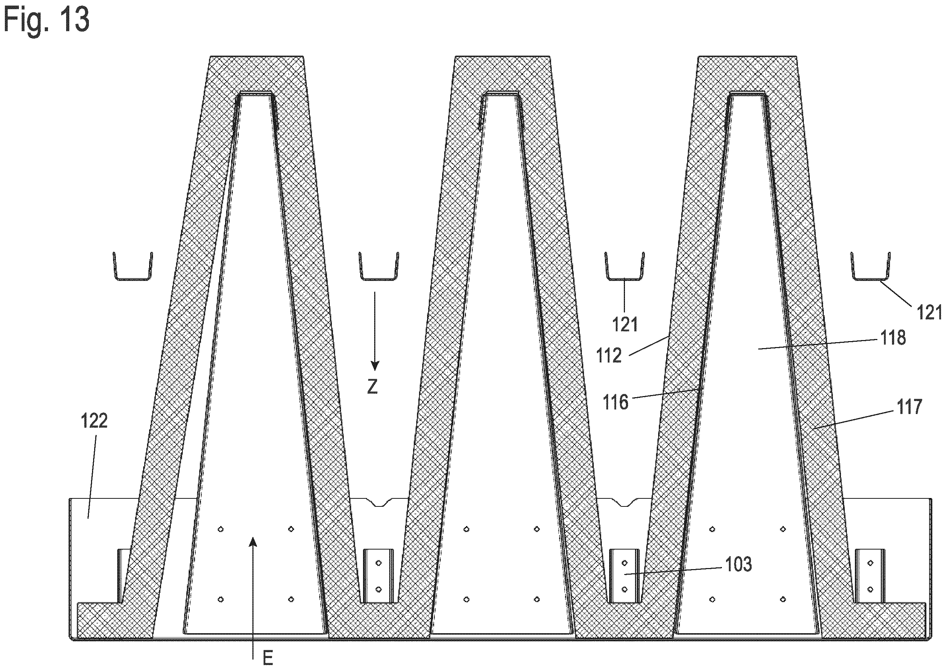

Fig. 13 zeigt nochmals die Fixierung des Flächenfiltermediums 112 durch Verspannen. Die Spannmittel 121 werden in einer Einstreckrichtung Z entgegen der Strömungsrichtung E bis zur Endposition durch Verrastung hinter der Auflaufkante 104 eingesteckt. Ebenfalls aus Fig. 13 erkennbar ist die geschlossene Endfläche 118 zwischen den Rahmenwänden 116 und 117.

Diese Konstruktion zeichnet sich besonders durch ihr geringes Gewicht und ihren stabilen und zugleich materialschonenden Aufbau auf. Die vergleichsweise offene Struktur ermöglicht die Bereitstellung einer vergrößerten Filterfläche, welche andernfalls durch die Gitterstruktur von Stützgitterwänden zumindest teilweise überdeckt wäre. Die durch die Rahmenform der Rahmenwände bereitgestellte Stützfunktion ist ausreichend um eine sichere bypassfreie Filtration für die anwendungsspezifischen Anströmungsgeschwindigkeiten des Oversprays zu gewährleisten.

### Bezugszeichen

- 1: Filtereinsatz
- 2: Stützgittergestell
- 3: Randkontur
- 4: Schenkel
- 5: Schenkel
- 6: Stützgitterwand
- 7: Stützgitterwand
- 8: Anströmplatte
- 9: Durchtrittsöffnungen
- 9a: Einlassschlitz
- 9b: Einlassschlitz
- 10: Trennsteg
- 11: Stützgitterwand 11' Stützgitterwand
- 12: Haltemittel
- 13: Flächenfiltermedium
- 14: Schenkel (Haken)
- 15: Endbereich
- 16: Kante
- 17: Weitere Haltemittel
- 18: Schenkel
- 19: Verriegelungsvorrichtung
- 20: Riegelstangen
- 21: Durchführungsöffnungen
- 22: Laschen
- 23: Winkelfläche
- 24: Stützstreben
- 25: Öffnungsbereich
- 26: Kreuzungspunkt
- 27: Abkantungsfläche
- 28: Kante
- 29: Verbindungsplatte
- 30: Kopplungsmittel

- 50: Trägheitsabscheider
- 51: Halbrohr
- 52: Halbrohr
- 53: Rahmen
- 54: Kopplungsmittel
- 55: Kopplungsmittel
- 56: Auflagenschenkel
- 57: Beabstandungsschenkel
- 58: Aufnahme

- 100: Gehäusebereich
- 101: Anschlag

- 102: Stützgestell
- 103: Rastmittel
- 104: Auflaufkante
- 105: Anströmöffnung
- 108: Anströmplatte
- 109: Rahmenkragen
- 110: Filtereinsatz
- 111: Rahmenleiste
- 112: Flächenfiltermedium
- 113: Freibereich
- 115: Scheitel
- 116: Rahmenwände
- 117: Rahmenwand
- 118: Endfläche
- 121: Spannmittel
- 122: Rahmen

- 201: Entkopplung des beladenen Trägheitsabscheiders
- 202: getrennte Entnahme eines beladenen Filtereinsatzes
- 203: Einsetzung eines neuen Filtereinsatzes
- 204: Aufsetzen eines neuen Trägheitsfilters

- Z: Einsteckrichtung
- E: Strömungsrichtung

## Patentansprüche

1. Verfahren zur Ausbildung eines Filtermoduls (1) in einer Filteranlage zur Reinigung eines mit Overspray-beladenen Luftstroms, wobei die Filteranlage einen insbesondere umfangsseitig geschlossenen Gehäusebereich (100) des Filtermoduls als Abschnitt eines Overspray-ableitungskanals der Filteranlage aufweist, **gekennzeichnet durch die folgenden Schritte:**
A Entkopplung (201) eines beladenen Trägheitsabscheiders (50) gegenüber dem Gehäusebereich (100) der Overspray-Filteranlage;
B Entnahme (202) eines beladenen Filtereinsatzes (1, 101, 110) mit einem beladenen Flächenfiltermedium (12) und einem Stützgittergestell (2) und/oder einem Stützgestell (102) aus dem Gehäusebereich (100);
C Einsetzen (203) eines neuen Filtereinsatzes oder Einsetzen eines Filtereinsatzes mit einem neuen Flächenfiltermedium und dem Stützgittergestell (12) und/oder dem Stützgestell (102); und
D Aufsetzen und/oder Einsetzen (204) eines neuen Trägheitsfilters oder des beladene Trägheitsfilters auf oder in den Gehäusebereich (100) mit dem eingesteckten Filtereinsatz (1, 101, 110).

2. Verfahren nach Anspruch 1, **dadurch gekennzeichnet, dass** der neue oder der beladene Trägheitsfilter (50) lösbar durch Formschluss oder Klemmkräfte an dem Gehäusebereich (100) und/oder dem Filtereinsatz (1) gehalten wird.

3. Verfahren nach Anspruch 1 oder 2, **dadurch gekennzeichnet, dass** der neue oder der beladene Trägheitsfilter (50) durch Festlegen an dem Filtereinsatz (1) aufgesetzt wird und dabei vorzugsweise formschlüssig mit dem Filtereinsatz verbunden, insbesondere verhakt, wird.

4. Verfahren nach einem der vorhergehenden Ansprüche, **dadurch gekennzeichnet, dass** das Einsetzen des neuen Filtereinsatzes (1) oder des Filtereinsatzes (1) mit dem neuen Flächenfiltermedium (12) bis zu einem im Gehäusebereich (100) angeordneten Anschlag erfolgt.

5. Verfahren nach einem der vorhergehenden Ansprüche, **dadurch gekennzeichnet, dass** der Filtereinsatz (1, 110) umfassend das Stützgittergestell (2) und/oder Stützgestell (102) gemeinsam mit dem Flächenfiltermedium (12, 112), einen Taschenfilter mit V-förmigen Filtertaschen (120) ausbildet.

6. Verfahren nach einem der vorhergehenden Ansprüche, **dadurch gekennzeichnet, dass** das Flächenfiltermedium (12, 112) über die Rahmenwände oder über die Stützgitterwände verspannt sind, wobei eines oder mehrere Spannmittel (121), insbesondere als Teil einer Verriegelungsvorrichtung (19, 119), an einem eine Anströmöffnung randseitig einfassenden Rahmen (122), einer Anströmplatte (8), einer Stützgitterwand (6, 7, 11, 11') und/oder einer Rahmenwand (116, 117) angeordnet sind.

7. Verfahren nach einem der vorhergehenden Ansprüche, **dadurch gekennzeichnet, dass** der Trägheitsfilter (50) und/oder das Stützgittergestell (2) und/oder das Stützgestell (102) zumindest bereichsweise oder vollständig aus einem metallischen pyrolysefesten Material besteht und dass der in Schritt A entnommene Trägheitsfilter (50) und/oder der in Schritt B entnommene Filtereinsatz (1) einer zumindest teilweisen thermischen Reinigung, vorzugsweise einer Pyrolyse von mehr als 500°C, unterzogen wird.

8. Verfahren nach einem der vorhergehenden Ansprüche, **dadurch gekennzeichnet, dass** das Stützgittergestell (2) und/oder Stützgestell (102) des Filtereinsatzes (1) eine Mehrzahl von Stützgitterwänden (6, 7, 11, 11') oder eine Mehrzahl von Rahmenwänden (116, 117) und ein Flächenfiltermedium (12, 112) aufweist, wobei das Stützgittergestell (2) und/oder das Stützgestell (102) eine Anströmplatte (8) aufweist und wobei der Filtereinsatz (1) senkrecht zur Flächennormalen der Anströmplatte (8) zumindest bereichsweise offen ausgebildet ist und dass das Flächenfiltermedium (13) zumindest an einzelnen Stützgitterwänden (6, 7, 11, 11') des Stützgittergestells (2) oder an einzelnen Rahmenwänden (116, 117) des Stützgestells (102) klemmend festgelegt ist und/oder formschlüssig festgelegt ist und/oder mittels von mechanischen Verbindungsmitteln festgelegt ist.

9. Verfahren nach Anspruch 6, **dadurch gekennzeichnet, dass** eines oder mehrere der Stützgitterwände (6, 7, 11, 11') zumindest ein Haltemittel (12), vorzugsweise zumindest einen Haken aufweist, durch welchen das Flächenfiltermedium (13) gegen die Stützgitterwand (6, 7, 11, 11') gepresst wird und dadurch klemmend gehalten wird.

10. Verfahren nach Anspruch 6 oder 7, **dadurch gekennzeichnet, dass** die Festlegung des Flächenfiltermediums (12) an der Stützgitterwand (6, 7, 11, 11') durch die mechanischen Verbindungsmittel mittels einer Textilpistole festgelegt sind, wobei die mechanischen Verbindungsmittel als Nadeln, Heftklammern, Heftfäden und/oder Sicherheitsfäden ausgebildet sind.

11. Verfahren nach einem der vorhergehenden Ansprüche, **dadurch gekennzeichnet, dass** das Flächenfiltermedium (12, 112), vorzugsweise durch die Verriegelungsvorrichtung (19, 119), gegen das Stützgittergestell (2) oder das Stützgestell (102), vorzugsweise gegen die Stützgitterwände (6, 7, 11, 11') und/oder gegen die Rahmenwände (116, 117) und/oder die Anströmplatte (8) und/oder den Rahmen (122), verriegelt ist.

12. Verfahren nach einem der vorhergehenden Ansprüche, **dadurch gekennzeichnet, dass** die Schnittstelle zwischen dem Filtereinsatz (1) und dem Trägheitsfilter (50) vor oder entlang der stirnseitigen Kantenflächen des Gehäusebereichs (100) verläuft.

13. Verfahren nach einem der vorhergehenden Ansprüche, **dadurch gekennzeichnet, dass** der Gehäusebereich (100) während der Ausführung der Schritte A-D als ein Teil des Overspray-Ableitungskanals verbleibt.

14. Verfahren nach einem der vorhergehenden Ansprüche, **dadurch gekennzeichnet, dass** die Spannmittel (121) als leistenförmige Elemente ausgebildet sind.

15. Verfahren nach einem der vorhergehenden Ansprüche, **dadurch gekennzeichnet, dass** die Spannmittel (121) lösbar am Rahmen (122) angeordnet und vorzugsweise mit dem Rahmen (122) verriegelt und/oder verrastet sind.
